# FASCICULE DE BREVET EUROPEEN

(11) **EP 1 753 333 B1**
(45) Date de publication et mention de la délivrance du brevet: **26.12.2007**
(21) Numéro de dépôt: 05775265.1
(22) Date de dépôt: 03.06.2005
(51) Int. Cl.: A47J 45/06, A47J 36/38

(54) **BOUTON D'ECHAPPEMENT DE VAPEUR**
DAMPFAUSLASSKNOPF
VAPOUR EXHAUST KNOB

(30) Priorité: 11.06.2004 FR 0406378
(43) Date de publication de la demande: 21.02.2007
(73) Titulaire: SEB SA, 69130 Ecully (FR)
(72) Inventeur: PLICHON, Stéphane, F-74000 Annecy (FR)
(74) Mandataire: Lemoine, Jean-Sébastien
(86) Numéro de dépôt international: PCT/FR2005/001364
(87) Numéro de publication internationale: WO 2006/003281

(56) Documents cités:
- EP-A- 1 295 552
- DE-A1- 3 437 636
- US-A- 4 285 441

## Description

La présente invention concerne un bouton d'échappement de vapeur d'un couvercle d'un article culinaire du type casserole, sauteuse, poêle...

On connaît un bouton d'échappement de vapeur du type définissant une conduite d'évacuation de la vapeur et comprenant une enveloppe adaptée à être fixée à un couvercle d'article culinaire et un dispositif de régulation de la vapeur.

Un tel bouton est décrit dans DE-A-3 437 636.

Toutefois, dans ces boutons, les éléments constitutifs sont propres à une dimension de bouton correspondant à un couvercle précis d'article culinaire. Il est donc nécessaire d'avoir un stock important d'éléments constitutifs afin de pouvoir réaliser les différents types de bouton associés à une gamme d'article culinaire.

Selon l'invention telle que définie dans la revendication 1, dans le bouton du type précité, le dispositif de régulation est distinct de l'enveloppe, fixé à cette dernière, et comprend l'ensemble des moyens permettant la régulation de la vapeur dont un organe de commande manuelle.

Ainsi, un même dispositif de régulation peut être utilisé pour des boutons ayant des apparences extérieures différentes (taille, forme...). De ce fait, la gestion du stock est considérablement facilitée, tous les dispositifs de régulations ayant les mêmes composants, seule l'enveloppe dépendant du couvercle.

Selon un mode de réalisation particulier, le dispositif de régulation comprend un organe de positionnement qui comprend des éléments de positionnement de différents types, à chaque type d'éléments de positionnement étant associé une unique position de régulation de l'obturateur qui est mobile en translation selon la direction axiale par rapport à l'organe de positionnement, les éléments de positionnement d'un type étant décalés axialement par rapport aux éléments de positionnement d'un autre type, et recevant l'obturateur en butée de façon à définir la position de régulation correspondante, l'organe de déplacement étant mobile en translation selon la direction axiale par rapport à l'organe de positionnement, et comprenant des éléments de déplacement de différents types, à chaque type d'éléments de positionnement correspondant un unique type d'éléments de déplacement, les éléments de déplacement d'un type étant adaptés, quand l'organe de déplacement est entraîné dans sa position d'activation, à entraîner l'obturateur, initialement dans l'une de ses positions de régulation, hors des éléments de positionnement du type correspondant à cette position initiale, et à le déplacer de sorte que, quand l'organe de déplacement est entraîné dans sa position de repos, il vient en butée contre les éléments de positionnement d'un autre type de façon à s'immobiliser dans sa position de régulation correspondante.

Selon un mode de réalisation particulier, l'obturateur comprend un élément qui est rotatif autour de l'axe de translation et qui est adapté à venir en butée cycliquement contre les éléments de positionnement et les éléments de déplacement, chaque élément de positionnement comprenant une surface d'immobilisation définissant la position de régulation correspondante de l'obturateur et dans laquelle l'élément rotatif est dans une position angulaire d'arrêt, et une surface de réception le long de laquelle, quand l'obturateur est entraîne vers la position de régulation correspondante, l'élément rotatif est adapté à glisser de façon à pivoter d'une position angulaire de mise en butée jusqu'à la position angulaire d'arrêt définie par l'élément de positionnement, chaque élément de déplacement comprenant une surface de déplacement le long de laquelle, quand l'obturateur est déplacé jusque dans sa position de manoeuvre, l'élément rotatif est adapté à glisser de façon à pivoter de la position angulaire d'arrêt définie par l'élément de positionnement hors duquel l'élément rotatif a été entraîné par ce déplacement, jusqu'à la position angulaire de mise en butée correspondant à l'élément de positionnement contre lequel l'obturateur vient en butée quand il retourne en direction de ses positions de régulation à partir de sa position de manoeuvre.

Selon un mode de réalisation particulier, l'élément rotatif a la forme générale d'une étoile dont chaque branche est formée par un doigt adapté à prendre appui successivement les éléments de positionnement et les éléments de déplacement, les éléments de déplacement et les éléments de positionnement étant disposés annulairement autour de l'axe de rotation de l'élément rotatif.

Selon un mode de réalisation particulier, l'organe de positionnement est porté par une base qui comprend des ouvertures permettant le passage et le coulissement des éléments de déplacement.

Selon un mode de réalisation particulier, un ressort sollicite, d'une part, l'obturateur vers ses positions de régulation, et, d'autre part, l'organe de déplacement vers sa position de repos.

Selon un mode de réalisation particulier, un organe de commande manuelle, solidaire de l'organe de déplacement, permet l'entraînement de ce dernier vers sa position d'activation, à l'encontre du ressort.

Selon un mode de réalisation particulier, l'obturateur est mobile entre deux positions de régulation.

Selon un mode de réalisation particulier, à chaque position de régulation de l'obturateur correspond une position de repos spécifique de l'organe de déplacement.

Selon un mode de réalisation particulier, un ressort, prenant appui contre l'organe de positionnement, sollicite l'organe de déplacement vers sa seule position de repos.

D'autres particularités et avantages apparaîtront dans la description d'un mode de réalisation donné à titre d'exemple non limitatif et illustré par les dessins mis en annexe.

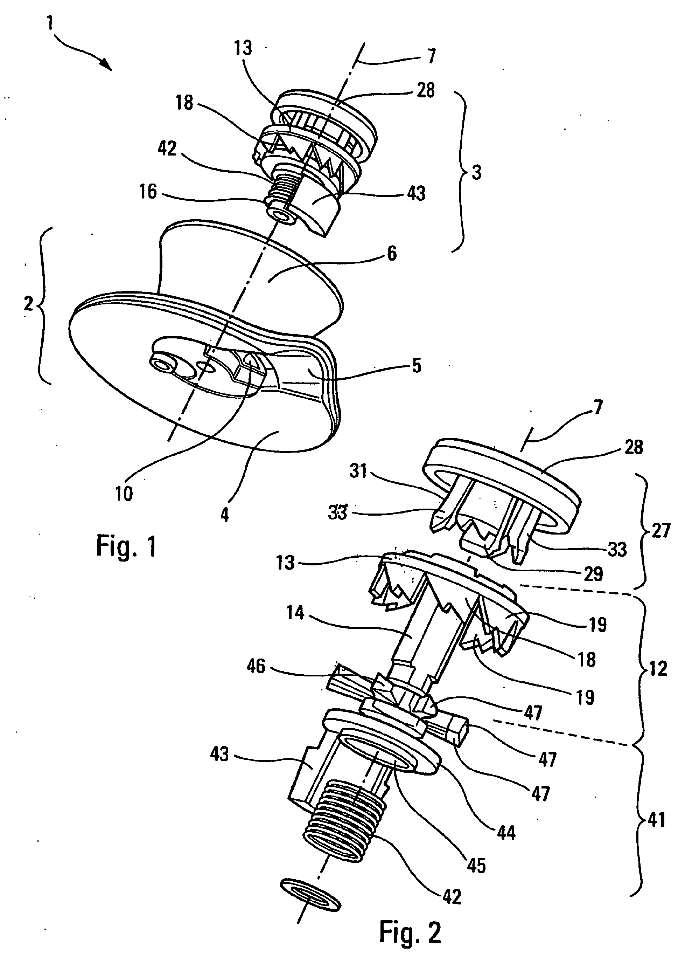

La figure 1 est une vue en perspective éclatée d'un bouton d'échappement conforme à la présente invention ;
La figure 2 est une vue en perspective éclatée du dispositif de régulation du bouton d'échappement illustré à la figure 1 ;

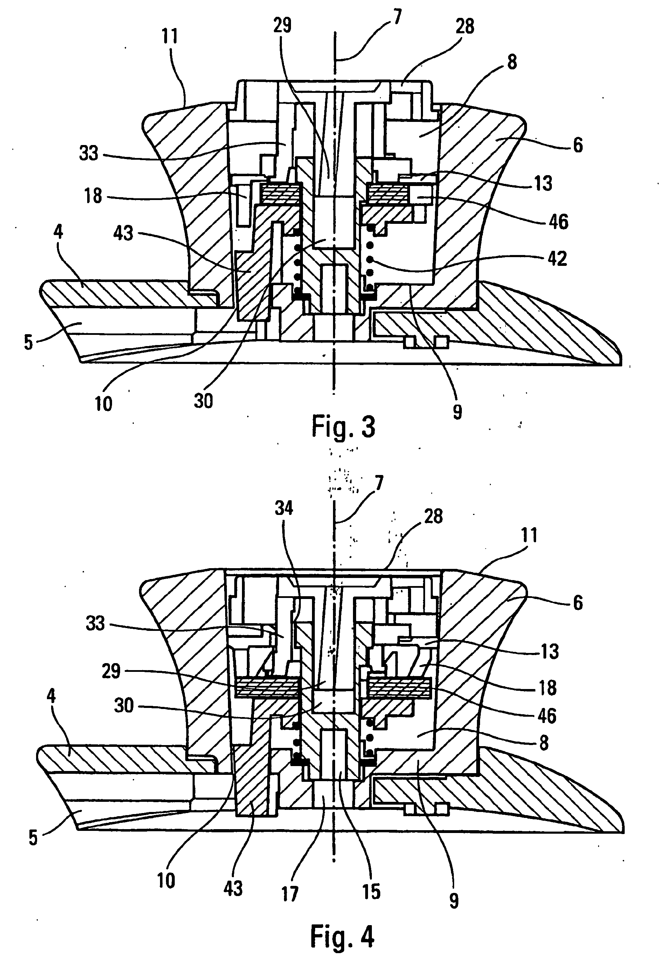

La figure 3 est une vue en coupe axiale du bouton, l'obturateur étant dans sa position ouverte ;
La figure 4 est une vue similaire à la figure 3, l'obturateur étant dans sa position fermée ;

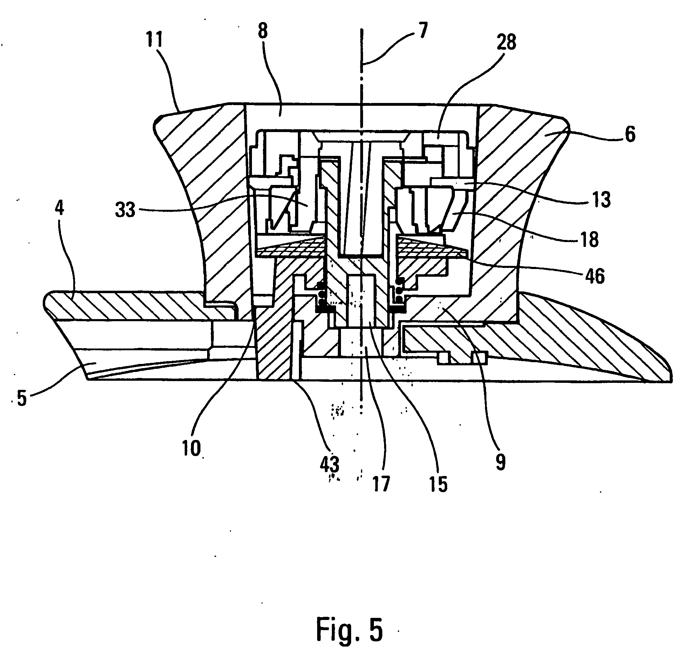

La figure 5 est une vue similaire aux figures 3 et 4, l'obturateur étant dans sa position de manoeuvre ; et

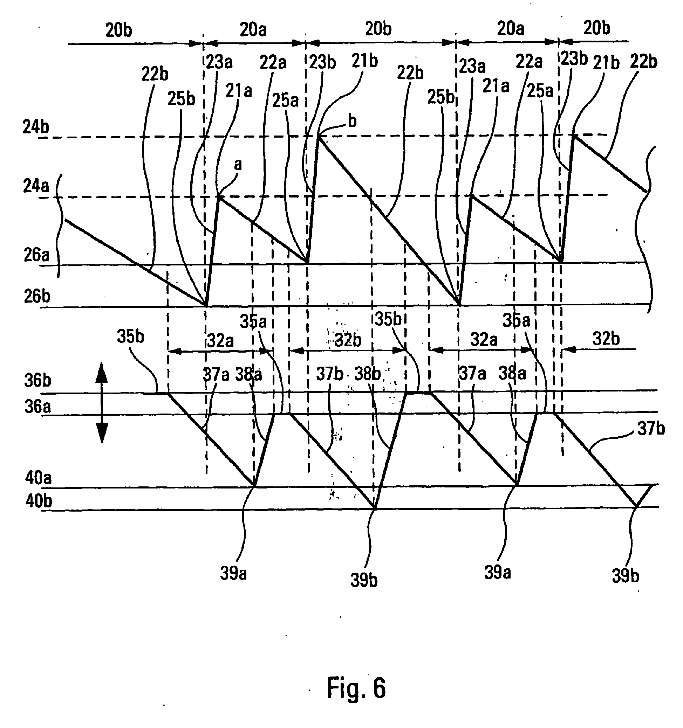

La figure 6 est un schéma illustrant la disposition relative entre l'organe de positionnement et l'organe de déplacement.

Un couvercle d'un article culinaire, par exemple d'une casserole, comprend un orifice de passage de la vapeur qui est générée par la cuisson des aliments disposés dans l'article culinaire. Sur ce couvercle est fixé un bouton d'échappement de la vapeur 1 permettant de réguler la quantité de vapeur évacué hors de l'article culinaire.

Le bouton d'échappement 1 comprend une enveloppe 2 qui est fixée sur le couvercle et un dispositif de régulation 3 qui est fixé à l'enveloppe 2.

L'enveloppe 2 est la partie externe du bouton d'échappement 1 qui est conformée de façon à répondre à un aspect extérieur désiré. Le dispositif de régulation 3 permet de réguler l'échappement de la vapeur, il est conformé de façon à être le plus indépendant possible de l'enveloppe 2. L'enveloppe 2 ne comportant ainsi aucun élément permettant la régulation de l'évacuation de la vapeur.

L'enveloppe 2 comprend une assise 4 qui est adaptée à être fixée sur le couvercle et qui est conformée de façon à former avec ce dernier une conduite d'évacuation de la vapeur 5.

L'enveloppe 2 comprend également un guide 6 qui a la forme générale d'un cylindre dont l'axe 7 s'étend perpendiculairement à la conduite d'évacuation de la vapeur 5. Le cylindre comprend une cavité axiale 8 fermée par une surface d'appui 9 qui est fixée à l'assise 4. La surface d'appui 9 s'étend au moins partiellement au-dessus de la conduite d'évacuation et elle comprend une ouverture de régulation 10 la traversant de part en part de façon à mettre en communication la conduite d'évacuation 5 et la cavité 8.

Le dispositif de régulation 3 permet de réguler la quantité de vapeur s'échappant par la conduite d'évacuation 5. Le dispositif de régulation 3 est logé dans la cavité axiale 8. Il repose sur la surface d'appui 9 et est accessible par l'extrémité axiale 11 de la cavité 8 opposée à la surface d'appui 9. Ni l'assise 4, ni le guide 6 n'ont un quelconque rôle sur la régulation de l'évacuation de la vapeur, excepté, le fait de définir la conduite d'évacuation 5 et de porter le dispositif de régulation 3.

Le dispositif de régulation 3 comprend une base 12 qui est fixée au guide 6.

La base 12 comprend une rondelle 13 qui s'étend dans le guide 6 perpendiculairement à l'axe 7 de ce dernier.

La base 12 comprend également un plot de maintien 14 qui pend depuis le centre de la rondelle 13 en direction de la surface d'appui 9. Ce plot 14 comprend à son extrémité libre un alésage 15 permettant le passage d'une vis 16 et, ainsi, sa fixation au guide 6 dont la surface d'appui 9 comprend un orifice 17 similaire traversé par cette vis 16. Le plot 14 s'étend selon l'axe 7 du guide 6 une fois la base 12 fixée au guide 6.

La base 12 comprend également un organe de positionnement 18 qui pend depuis la rondelle 13, en direction de la surface d'appui 9. L'organe de positionnement 18 s'étend de façon moindre que le plot de maintien 14 qu'il entoure.

L'organe de positionnement 18 a la forme d'une couronne annulaire qui s'étend selon l'axe 7 du guide 6 et est formé par au moins une dent de positionnement 19. En l'occurrence, l'organe de positionnement 18 est formé par huit dents de positionnement 19 identiques et régulièrement espacées angulairement, chaque dent de positionnement 19 étant en contact avec deux autres dents 19.

Chaque dent de positionnement 19 comprend plusieurs éléments de positionnement 20a, 20b, chacun d'un type différent. En l'occurrence, chaque dent 19 comprend deux éléments de positionnement 20a, 20b. Pour chaque dent 19, les éléments de positionnement 20a, 20b sont décalés axialement et angulairement. Dans l'organe de positionnement 18, chaque élément de positionnement 20a, 20b d'un type déterminé est délimité angulairement par deux éléments de positionnement 20b, 20a d'un autre type. La disposition relatives des éléments de positionnement 20a, 20b dans une dent 19 est la même quelle que soit la dent 19. En l'occurrence, chaque élément de positionnement 20a, 20b d'un type déterminé est délimité angulairement par deux éléments de positionnement de l'autre type 20b, 20a, l'un de la même dent de positionnement 19, l'autre de la dent de positionnement 19 adjacente.

Quel que soit le type, chaque élément de positionnement 20a, 20b a la forme générale d'un V ou d'un U et comprend une surface d'immobilisation 21a, 21b qui est entourée, d'une part, par une surface de réception 22a, 22b, et, d'autre part, par une surface de limitation 23a, 23b.

Chaque surface d'immobilisation 21a, 21b s'étend perpendiculairement au plot de maintien 14 et peut avoir une amplitude angulaire extrêmement faible. Les surfaces d'immobilisation 21a,21b d'élément de positionnement 20a,20b d'un même type sont disposés dans un même plan d'immobilisation 24a,24b perpendiculaire au plot de maintien 14. A chaque type d'élément de positionnement 20a,20b correspond un plan d'immobilisation 24a,24b, les différents plans d'immobilisation 24a,24b étant décalés axialement les uns par rapport aux autres. En l'occurrence, l'organe de positionnement 18 défini deux plans d'immobilisation 24a,24b.

Chaque surface de réception 22a,22b est inclinée par rapport au plan d'immobilisation 24a,24b selon un certain sens, et, de préférence, fait, avec ce dernier, un angle compris entre 30° et 60°. Toutes les surfaces de réception 22a,22b de l'organe de positionnement 18 sont inclinées dans le même sens.

Chaque surface de limitation 23a,23b est fortement inclinée par rapport au plan d'immobilisation 24a,24b. L'inclinaison est en générale supérieure à 60°, et, de préférence très proche de 90°, voire de 90°. De préférence, toutes les surfaces de limitation 23a,23b sont inclinées dans le sens opposé de celui des surfaces de réception 22a,22b.

La surface de réception 22a,22b d'un élément de positionnement d'un certain type 20a,20b est limitée par la surface d'immobilisation 23b,23a de l'élément de positionnement adjacent d'un autre type 20b,20a qui fait partie, soit de la même dent de positionnement 19, soit de la dent de positionnement adjacente 19. La jonction d'une surface de réception 22a,22b avec la surface d'immobilisation adjacente 23b,23a défini une crête de jonction 25a,25b.

Les crêtes de jonction 25a,25b définies par la surface de réception 22a,22b d'un élément de positionnement d'un premier type 20a,20b avec la surface de limitation 23b,23a d'un élément de positionnement d'un autre type 20b,20a définissent un plan de crête 26a,26b qui est perpendiculaire au plot de maintien 14. A chaque type de crête de jonction 25a,25b correspond un plan de crête 26a,26b, les différents plans de crête 26a,26b pouvant être décalés axialement les uns par rapport aux autres, ou non. En l'occurrence, l'organe de positionnement 18 définit deux plans de crête 26a,26b.

Le dispositif de régulation 3 comprend un poussoir 27 qui est monté mobile en translation le long de l'axe 7 du guide 6. Le poussoir 27 est mobile entre une position d'activation et au moins une position de repos. Le poussoir 27 peut prendre, au plus, autant de position de repos qu'il y a de plan d'immobilisation 224a,24b. En l'occurrence, le poussoir 27 peut prendre deux positions de repos.

Le poussoir 27 comprend un organe de commande manuelle 28 qui s'étend perpendiculairement à l'axe 7 du guide 6, et qui est accessible de l'extérieur. L'organe de commande manuelle 28 est ainsi disposé au-dessus de la base 12 (en supposant que l'assise 4 est la pièce la plus basse du bouton d'échappement 1). L'organe de commande manuelle 28 est un disque 28 s'étendant perpendiculairement à l'axe 7 du guide 6. Cet organe de commande 28 permet à l'utilisateur, en appuyant dessus, de faire coulisser le poussoir 27 en direction de la surface d'appui 9 et de le faire passer de l'une de ses positions de repos à sa position d'activation qui est sa position la plus enfoncée.

Le poussoir 27 comprend également une tige de guidage 29 qui pend depuis le centre du disque 28 en direction de la surface d'appui 9. Cette tige 29 est montée coulissante à l'intérieur d'un alésage de guidage 30 réalisé dans le plot de maintien 14.

Le poussoir 27 comprend également un organe de déplacement 31 qui pend depuis le disque 28, en direction de la surface d'appui 9. L'organe de déplacement 31 s'étend au-delà de l'organe de positionnement 18 quand le poussoir 27 est dans sa position d'activation, et de façon moindre que le plot de maintien 14.

L'organe de déplacement 31 comprend, pour chaque type d'élément de positionnement 20a,20b, quelle que soit le nombre d'éléments de positionnement de ce type, au moins un élément de déplacement 32a,32b d'un certain type. En l'occurrence, il y a deux types d'éléments de déplacement 32a,32b, et quatre éléments de déplacement par type. Chaque élément de déplacement d'un même type 32a,32b sont identiques. De plus, les éléments de déplacement de type différents pourraient être identiques.

L'organe de déplacement 31 comprend quatre pattes 33 qui sont réparties angulairement autour de la tige de guidage 29 et qui sont entourées par la couronne formant l'organe de positionnement 18. Chaque patte 33 s'étend selon l'axe 7 du guide 6 et est montée coulissante au travers d'une ouverture de passage 34 réalisée dans la rondelle 13. Ces pattes 13 empêchent la rotation de l'organe de déplacement 31 autour du plot de maintien 14.

Les éléments de déplacement 32a,32b sont portés par l'extrémité libre des pattes 33. Chaque patte 33 comprend deux éléments de déplacement 32a,32b qui sont espacées angulairement l'un de l'autre et sont réunis l'un à l'autre par une surface de réunion 35a,35b. Chaque surface de réunion 35a,35b s'étend perpendiculairement au plot de maintien 14. Par ailleurs, du fait de la discontinuité angulaire de l'organe de déplacement 31 qui est formé par les quatre pattes 33, il existe des surfaces de réunion 35a,35b qui, au lieu d'être limitées par deux éléments de déplacement 32a,32b, sont limitées par un élément de déplacement 32a,32b et l'extrémité de la patte 33 portant cette surface 35a,35b.

Les surfaces de réunion 35a,35b joignant un élément de déplacement d'un premier type 32a,32b avec un élément de déplacement d'un autre type 32b,32a définissent un plan de butée 36a,36b qui est perpendiculaire au plot de maintien 14. A chaque type de surface de réunion 35a,35b correspond un plan de butée 36a,36b, les différents plans de butée 36a,36b pouvant être décalés axialement les uns par rapport aux autres, ou non. En l'occurrence, les pattes 33 définissent deux plans de butée 36a,36b. Les surfaces de réunion 35a,35b d'un type particulier s'étendent angulairement à l'intérieur de l'amplitude angulaire d'une surface de réception 22a,22b d'un élément de positionnement 20a,20b du type correspondant, et aux surfaces de réception 22a,22b d'un certain type ne sont associées que des surfaces de réunion 35a,35b d'un même type.

Quelque soit le type, chaque élément de déplacement 32a,32b a la forme générale d'un accent circonflexe inversé comprenant une surface de déplacement 37a,37b et une surface d'évitement 38a,38b.

Chaque surface de déplacement 37a, 37b est inclinée par rapport au plan de butée 36a, 36b selon un certain sens, et, de préférence, fait, avec ce dernier, un angle compris entre 30° et 60°. Toutes les surfaces de déplacement 37a, 37b de l'organe de déplacement 31 sont inclinée dans le même sens que les surfaces de réception 22a, 22b. Une surface de déplacement 37a, 37b d'un élément de déplacement 32a, 32b d'un type particulier s'étend angulairement de part et d'autre d'une surface d'immobilisation 21a, 21b d'un élément de positionnement 20a, 20b du type correspondant, et aux surfaces d'immobilisation 21a, 21b d'un élément de positionnement 20a, 20b d'un certain type ne sont associées que des surfaces de déplacement 37â, 37b d'un élément de déplacement 32a, 32b du type correspondant. D'un côté, la limite angulaire de la surface de déplacement 37a, 37b est au droit de la surface de réception 22a, 22b délimitant la surface d'immobilisation recouverte 21a, 21b, de l'autre côté, la limite angulaire de la surface de déplacement 37a, 37b est au droit de la surface de réception 22b, 22a qui délimite la crête de jonction 25b, 25a délimitée par la surface de limitation 23a, 23b délimitant la surface d'immobilisation recouverte 21a, 21b.

Chaque surface d'évitement 38a, 38b est fortement inclinée par rapport au plan d'immobilisation 36a, 36b. L'inclinaison est, en générale, supérieure à 60°, et, de préférence, proche de 80°. De préférence, toutes les surfaces d'évitement 38a, 38b sont inclinées dans le sens opposé de celui des surfaces de déplacement 37a, 37b. Chaque surface d'évitement 38a, 38b est délimitée angulairement par une surface de réunion 35a, 35b et une surface de déplacement 37a, 37b. Une surface d'évitement 38a, 38b d'un type particulier et la surface de réunion 35a, 35b qu'elle délimite s'étendent toutes les deux à l'intérieur de l'amplitude angulaire de la même surface de réception 22a, 22b du type correspondant.

La jonction d'une surface d'évitement 38a, 38b et d'une surface de déplacement 37a, 37b définit un pic 39a, 39b. Les pics 39a, 39b portés par un élément de déplacement d'un certain type définissent un plan de pic 40a, 40b qui est perpendiculaire au plot de maintien 14. A chaque type de jonction correspond un plan de pic 40a, 40b, les différents plans de pic 40a, 40b pouvant être décalés axialement les uns par rapport aux autres, ou non. En l'occurrence, les pattes 33 définissent deux plans de pic 40a, 40b.

D'une façon générale, le pas angulaire séparant deux éléments de déplacement d'un même type 20a,20b est le même que celui séparant deux éléments de positionnement d'un même type 32a,32b.

Le dispositif de régulation 3 comprend également un obturateur 41 adapté à obturer la conduite d'évacuation 5. L'obturateur 41 est disposé entre la surface d'appui 9 et la rondelle 13 de la base 12 et est monté mobile en translation le long de l'axe 7 du guide 6 entre une position instable de manoeuvre et autant de positions stables de régulation qu'il y a de plan d'immobilisation 24a,24b. En l'occurrence, l'obturateur 41 peut prendre deux positions de régulation, une position ouverte dans laquelle il ne gêne pas l'écoulement de la vapeur, et une position dite fermée dans laquelle il permet de laisser une quantité de vapeur juste suffisante pour éviter que la pression générée par la vapeur ne soulève le couvercle.

Un ressort 42, disposé entre l'obturateur 41 et la surface d'appui 9, sollicite l'obturateur 41 hors de sa position de manoeuvre, vers ses positions de régulation. Du fait du ressort 42, l'obturateur 41 est en butée contre l'organe de positionnement 18. Du fait de son propre poids, l'organe de déplacement 31 repose contre l'obturateur 41 et le ressort 32, par l'intermédiaire de l'obturateur 41, sollicite le poussoir 27 vers ses positions de repos.

Quand l'obturateur 41 est dans une de ses positions de régulation, il est en butée les éléments de positionnement 20a,20b d'un certain type, ce qui définit sa position axiale, et le poussoir 27 est dans une de ses positions de repos. Quand l'obturateur 41 est dans sa position de manoeuvre, il n'est plus en butée contre l'organe de positionnement 18, du fait de la poussée exercée par le poussoir 27 qui est dans sa position d'activation.

Quand le poussoir 27 est entraîné par l'utilisateur de l'une de ses positions de repos à sa position d'actionnement, l'obturateur 41 initialement dans l'une de ses positions de régulation est dégagé des éléments de positionnement 20a,20b du type correspondant à cette position du fait de son entraînement par les éléments de déplacement 32a,32b de ce même type, et il est déplacé, par ces mêmes éléments de déplacement 32a,32b, de sorte que, quand, l'utilisateur lâche le poussoir 27, le ressort 42 entraîne l'obturateur 41 contre les éléments de positionnement 20b,20a d'un autre type façon à immobiliser l'obturateur 41 dans la position de régulation correspondant à ces éléments de positionnement 20b,20a de cet autre type.

L'obturateur 41 comprend un élément d'obturation 43 qui est adapté à contrôler l'échappement de la vapeur et qui, de ce fait, est conformé de façon à pouvoir coulisser le long de l'ouverture de régulation 10 et à pénétrer plus ou moins dans la conduite d'évacuation 5 selon la position de l'obturateur 41. Cet élément d'obturation 43 s'étend dans la direction axiale et pend depuis une bague 44 comportant une ouverture centrale 45 permettant le passage du plot de maintien 14. La bague 44 et l'élément d'obturation 43 ne peuvent pas tourner autour du plot de maintien 14. Le ressort 42 prend appui contre cette bague 44 dont le diamètre extérieur est inférieur au diamètre intérieur de la couronne de l'organe de positionnement 18.

L'obturateur 41 comprend également un élément rotatif 46 qui est monté en rotation autour du plot de maintien 14. L'élément rotatif 46 est disposé entre la bague 44 et la rondelle 13 et est en contact avec l'organe de déplacement 31 et l'organe de positionnement 18. En l'occurrence, l'élément rotatif 46 est une pièce distincte de celle portant l'élément d'obturation 43. Toutefois, étant en contact direct d'un côté avec le poussoir 27 qui est utilisé pour entraîner l'élément d'obturation 43 vers sa position de manoeuvre, et de l'autre avec la bague 44 qui est sollicité par le ressort 42 dans l'autre sens, l'élément rotatif 46 est solidaire en translation avec la bague 44 et l'élément d'obturation 43.

L'élément rotatif 46 a la forme d'un anneau comportant une ouverture centrale dans laquelle coulisse le plot de maintien 14, cet anneau étant muni d'au moins un doigt 47 qui s'étend radialement, perpendiculairement au plot de maintien 14. En l'occurrence, l'élément rotatif 46 comprend huit doigts 47. Chaque doigt 47 reçoit en butée successivement et en alternance les différents types d'élément de déplacement 32a,32b et les différents types d'élément de positionnement 20a,20b. Le diamètre extérieur de l'anneau est inférieur au diamètre du cercle défini par la surface annulaire intérieure des quatre pattes 33 de sorte que ces dernières ne viennent en butée que contre les doigts 47.

L'angle séparant deux doigts 47 successifs est le même que le pas angulaire séparant deux éléments de positionnement 20a,20b d'un même type et que celui séparant deux éléments de déplacement 32a,32b d'un même type. De ce fait, l'élément rotatif 46 (et l'obturateur 41) ne peut être en butée contre des éléments de positionnement de type différents ou contre des éléments de déplacement de type différents.

Le mode de fonctionnement du bouton d'échappement 1 permettant le passage de l'obturateur de sa position fermée (stable) à sa position ouverte (stable) est le suivant :

Initialement, sous l'action du ressort 42, l'obturateur 41 est dans sa position fermée et l'élément rotatif 46 est contre les éléments de positionnement du premier type 20a qui correspond à la position fermée. De façon plus précise, les doigts 47 sont en butée contre les surfaces d'immobilisation 21a des éléments de positionnement du premier type 20a, ce qui défini, pour l'élément rotatif 46, d'une part, sa position axiale (le premier plan d'immobilisation 24a) et, d'autre part, une position angulaire d'arrêt. En outre, du fait du poids du poussoir 27, les éléments de déplacement 32a du premier type qui sont associés aux éléments de positionnement 20a du premier type, sont en butée contre l'obturateur 41. De façon plus précise, les doigts 47 reçoivent en butée les surfaces de déplacement 37a qui sont au droit des surfaces d'immobilisation 21a des éléments de positionnement 20a du premier type.

Le poussoir 27 est entraîné en direction de sa position d'actionnement par l'utilisateur. De ce fait, l'obturateur 41 est entraîné en direction de sa position de manoeuvre. Du fait de l'inclinaison de la surface de déplacement37a qui est en butée contre le doigt 47, ce dernier est plaqué contre la surface de limitation 23a portée par l'élément de positionnement 20a du premier type et glisse le long de cette surface de limitation 23a. L'élément rotatif 46 subit ainsi une éventuelle rotation qui correspond à la pente de la surface de limitation 23a correspondante.

Quand les doigts 47 dépassent la crête de jonction 25b définie par la surface de limitation 23a de l'élément de positionnement 20a du premier type, ils ne sont plus en butée contre l'organe de positionnement 18. Sous l'action du ressort 42 et du fait de l'inclinaison des surfaces de déplacement 37a qui sont en contact avec les doigts 47, ces derniers glissent le long de cette surface jusqu'à atteindre les surfaces de réunion 35b adjacentes. De ce fait, l'élément rotatif 46 subit une rotation autour du plot de maintien 14, et les doigts 47 se trouvent au droit des surfaces de réception 22b qui définissent les crêtes 25b venant d'être franchies et qui appartiennent donc à l'élément de positionnement 20b du deuxième type correspondant à la position ouverte de l'obturateur.

Quand l'utilisateur relâche la pression, sous l'action du ressort, l'élément rotatif 46 est translaté, sans pivotement, jusqu'à ce que les doigts 47 viennent en contact avec les surfaces de réception 22b des éléments de positionnement 20b du deuxième type.

Une fois l'élément rotatif 46 en contact avec les éléments de positionnement 20b du deuxième type, les doigts 47 glissent le long des surfaces de réception 22b jusqu'à atteindre les surfaces d'immobilisation 20b adjacentes qui définissent la position ouverte de l'obturateur. Du fait de la rotation de l'élément rotatif 46, et comme le poussoir 27 est simplement posé sur cet élément 46, les doigts 47, successivement, glissent le long des surfaces de réunion 35b, franchissent les pics 39b et glissent partiellement le long des surfaces de déplacement 37b.

Le mode de fonctionnement du bouton d'échappement 1 permettant le passage de l'obturateur de sa position ouverte (stable) à sa position fermée (stable) est le même, les éléments de déplacement et les éléments de positionnement étant évidemment du type adéquat.

Ainsi, en imposant des pressions successives sur le poussoir, l'utilisateur fait passer l'obturateur, successivement, de l'une à l'autre de ses positions de régulation.

Il est à noter que le poussoir ne fait que reposer directement sur l'élément rotatif, et de ce fait, il possède deux positions de repos qui correspondent aux deux positions de régulation de l'obturateur. Cette particularité présente l'avantage de permettre une signalisation de la position de l'obturateur par la hauteur de la saillie du disque par rapport au guide.

Il serait possible de disposer un ressort entre le poussoir et l'organe de positionnement, sollicitant le poussoir dans la même direction que celle imposée par le ressort qui sollicite l'obturateur (c'est à dire vers le haut). De ce fait, le poussoir n'a alors qu'une seule position de repos.

## Revendications

1. Bouton d'échappement de vapeur (1) définissant une conduite d'évacuation (5) de la vapeur et comprenant d'une part, une enveloppe (2) adaptée à être fixée à un couvercle d'article culinaire et, d'autre part, un dispositif de régulation (3) de la vapeur distinct de l'enveloppe (2), fixé à cette dernière, et comprenant l'ensemble des moyens permettant la régulation de la vapeur dont un organe de commande manuelle (28), le dispositif de régulation (3) comprenant un organe de déplacement (31) mobile en translation selon une direction axiale (7) entre une position d'activation et au moins une position de repos, **caractérisé en ce que** le dispositif de régulation (3) comprend, d'une part, un poussoir (27) qui comporte l'organe de déplacement (31) et l'organe de commande manuelle (28), et, d'autre part, un obturateur (41) mobile en translation selon la direction axiale entre une position de manoeuvre et au moins deux positions stables de régulation d'échappement de la vapeur, et est conformé de sorte que, pendant que l'organe de déplacement (31) passe dans un mouvement de va-et-vient d'une position de repos à sa position d'activation puis à nouveau à une position de repos, l'obturateur (41) passe d'une position de régulation à une autre position de régulation.

2. Bouton (1) selon la revendication 1, **caractérisé en ce que** le dispositif de régulation (3) comprend un organe de positionnement (18) qui comprend des éléments de positionnement (20a,20b) de différents types, à chaque type d'éléments de positionnement (20a,20b) étant associé une unique position de régulation de l'obturateur (41) qui est mobile en translation selon la direction axiale par rapport à l'organe de positionnement (18), les éléments de positionnement (20a,20b) d'un type étant décalés axialement par rapport aux éléments de positionnement (20b,20a) d'un autre type, et recevant l'obturateur (41) en butée de façon à définir la position de régulation correspondante, l'organe de déplacement (31) étant mobile en translation selon la direction axiale (7) par rapport à l'organe de positionnement (18), et comprenant des éléments de déplacement (32a,32b) de différents types, à chaque type d'éléments de positionnement (32a,32b) correspondant un unique type d'éléments de déplacement (20a,20b), les éléments de déplacement (32a, 32b) d'un type étant adaptés, quand l'organe de déplacement (31) est entraîné dans sa position d'activation, à entraîner l'obturateur (41), initialement dans l'une de ses positions de régulation, hors des éléments de positionnement (20a,20b) du type correspondant à cette position initiale, et à le déplacer de sorte que, quand l'organe de déplacement (31) est entraîné dans sa position de repos, il vient en butée contre les éléments de positionnement (20b,20a) d'un autre type de façon à s'immobiliser dans sa position de régulation correspondante.

3. Bouton (1) selon la revendication 2, **caractérisé en ce que** l'obturateur (41) comprend un élément (46) qui est rotatif autour de l'axe de translation (7) et qui est adapté à venir en butée cycliquement contre les éléments de positionnement (20a,20b) et les éléments de déplacement (32a,32b), chaque élément de positionnement (20a,20b) comprenant une surface d'immobilisation (21a,21b) définissant la position de régulation correspondante de l'obturateur (41) et dans laquelle l'élément rotatif (46) est dans une position angulaire d'arrêt, et une surface de réception (22a,22b) le long de laquelle, quand l'obturateur (41) est entraîne vers la position de régulation correspondante, l'élément rotatif (46) est adapté à glisser de façon à pivoter d'une position angulaire de mise en butée jusqu'à la position angulaire d'arrêt définie par l'élément de positionnement (20a,20b), chaque élément de déplacement (32a,32b) comprenant une surface de déplacement (37a,37b) le long de laquelle, quand l'obturateur (41) est déplacé jusque dans sa position de manoeuvre, l'élément rotatif (46) est adapté à glisser de façon à pivoter de la position angulaire d'arrêt définie par l'élément de positionnement (20a,20b) hors duquel l'élément rotatif (46) a été entraîné par ce déplacement, jusqu'à la position angulaire de mise en butée correspondant à l'élément de positionnement (20b,20a) contre lequel l'obturateur (41) vient en butée quand il retourne en direction de ses positions de régulation à partir de sa position de manoeuvre.

4. Bouton (1) selon la revendication 3, **caractérisé en ce que** l'élément rotatif (46) a la forme générale d'une étoile dont chaque branche est formée par un doigt (47) adapté à prendre appui successivement les éléments de positionnement (20a,20b) et les éléments de déplacement 32a,32b), les éléments de déplacement (32a, 32b) et les éléments de positionnement (20a, 20b) étant disposés annulairement autour de l'axe de rotation (7) de l'élément rotatif (46).

5. Bouton (1) selon l'une des revendications 2 à 4, **caractérisé en ce que** l'organe de positionnement (18) est porté par une base (12) qui comprend des ouvertures (34) permettant le passage et le coulissement des éléments de déplacement (32a,32b).

6. Bouton (1) selon l'une des revendications 1 à 5, **caractérisé en ce qu'**un ressort (42) sollicite, d'une part, l'obturateur (41) vers ses positions de régulation, et, d'autre part, l'organe de déplacement (31) vers sa position de repos.

7. Bouton (1) selon la revendication 6, **caractérisé en ce que** l'organe de commande manuelle (28), solidaire de l'organe de déplacement (31), permet l'entraînement de ce dernier vers sa position d'activation, à l'encontre du ressort (42).

8. Bouton (1) selon l'une des revendications 1 à 7, **caractérisé en ce que** l'obturateur (41) est mobile entre deux positions de régulation.

9. Bouton (1) selon l'une des revendications 1 à 8, **caractérisé en ce qu'**à chaque position de régulation de l'obturateur (41) correspond une position de repos spécifique de l'organe de déplacement (31).

10. Bouton (1) selon l'une des revendications à 8, **caractérisé en ce qu'**un ressort, prenant appui contre l'organe de positionnement (18), sollicite l'organe de déplacement (31) vers sa seule position de repos.

## Claims

1. A vapour exhaust knob (1) defining a vapour removing conduit (5) and comprising on the one hand, a body (2) fixable to a lid of cookware and, on the other hand, a vapour control device (3) distinct from the body (2), fixed to the latter, and comprising all the vapour control means including a manual control member (28), the control device (3) comprising a displacement member (31) which is translationally mobile along an axial direction (7) between an actuation position and at least one rest position, **characterized in that** the control device (3) comprises on the one hand, a pusher (27) which includes the displacement member (31) and the manual control member (28) and, on the other hand, an obturator (41) translationally mobile along the axial direction between a manoeuvring position and at least two stable positions for controlling discharge of the vapour, and is conformed so that, while the displacement member (31) passes in a reciprocal movement from one rest position to its actuation position, and then again to a rest position, the obturator (41) passes from a control position to another control position.

2. The knob (1) according to claim 1, **characterized in that** the control device (3) comprises a positioning member (18) which comprises positioning components (20a, 20b) of different types, each type of positioning components (20a, 20b) being associated with a unique control position of the obturator (41) which is translationally mobile along the axial direction relatively to the positioning member (18), the positioning components (20a, 20b) of one type being axially shifted relative to the positioning components (20b, 20a) of another type, and receiving the obturator (41) in abutment so as to define the corresponding control position, the displacement member (31) being translationally mobile along the axial direction (7) relative to the positioning member (18), and comprising displacement components (32a, 32b) of different types, each type of positioning components (32a, 32b) corresponding to a unique type of displacement components (20a, 20b), the displacement components (32a, 32b) of one type being able, when the displacement member (31) is driven into its actuation position, to drive the obturator (41), initially in one of its control positions, out of the positioning components (20a, 20b) of the type corresponding to this initial position, and to displace it so that, when the displacement member (31) is driven into its rest position, it will abut against the positioning elements (20b, 20a) of another type so as to be immobilized in its corresponding control position.

3. The knob (1) according to claim 2, **characterized in that** the obturator (41) comprises a component (46) which is rotary around the translation axis (7) and which is able to cyclically abut against the positioning components (20a, 20b) and the displacement components (32a, 32b), each positioning component (20a, 20b) comprising an immobilization surface (21a, 21b) defining the corresponding control position of the obturator (41) and in which the rotary component (46) is in a stop angular position, and a receiving surface (22a, 22b) along which, when the obturator (41) is driven towards the corresponding control position, the rotary component (46) is able to slide in order to pivot from an abutment angular position to the stop angular position defined by the positioning component (20a, 20b), each displacement component (32a, 32b) comprising a displacement surface (37a, 37b) along which, when the obturator (41) is displaced up into its manoeuvring position, the rotary component (46) is able to slide in order to pivot from the stop angular position defined by the positioning component (20a, 20b) out of which the rotary component (46) was driven by this displacement, to the abutment angular position corresponding to the positioning component (20b, 20a) against which the obturator (41) will abut when it returns towards its control positions from its manoeuvring position.

4. The knob (1) according to claim 3, **characterized in that** the rotary component (46) has the general shape of a star, each branch of which is formed by a finger (47) capable of successively bearing upon the positioning components (20a, 20b) and the displacement components (32a, 32b), the displacement components (32a, 32b) and the positioning components (20a, 20b) being annularly positioned around the axis of rotation (7) of the rotary component (46).

5. The knob (1) according to any of claims 2 to 4, **characterized in that** the positioning member (18) is borne by a base (12) which comprises apertures (34) providing the passage for the displacement components (32a, 32b) and their sliding.

6. The knob (1) according to any of claims 1 to 5, **characterized in that** a spring (42) urges the obturator (41) towards its control positions on the one hand, and the displacement member (31) towards its rest position on the other hand.

7. The knob (1) according to claim 6, **characterized in that** the manual control member (28) integral with the displacement member (31) allows the latter to be driven towards its actuation position against the spring (42).

8. The knob (1) according to any of claims 1 to 7, **characterized in that** the obturator (41) is mobile between two control positions.

9. The knob (1) according to any of claims 1 to 8, **characterized in that** a specific rest position of the displacement member (31) corresponds to every control position of the obturator (41).

10. The knob (1) according to any of claims 2 to 8, **characterized in that** a spring pressing against the positioning member (18), urges the displacement member (31) towards its single rest position.

## Patentansprüche

1. Dampfauslassknopf (1), der einen Ablasskanal (5) des Dampfes bildet und einerseits aufweist ein Gehäuse (2), das an einem Deckel eines Kochartikels befestigt werden kann, und andererseits eine von dem Gehäuse (2) zu unterscheidende Reguliereinrichtung (3), die an diesem befestigt ist, und eine Gruppe von Bauteilen umfasst, die die Regulierung des Dampfes mit einem manuellen Steuerteil (28) ermöglicht, wobei die Reguliereinrichtung (3) ein translatorisch in einer axialen Richtung (7), zwischen einer Aktivierungsposition und wenigstens einer Ruheposition bewegliches Stellglied (3 1) umfasst, **dadurch gekennzeichnet, dass** die Reguliereinrichtung (3) aufweist einerseits einen Drücker (27), der das Stellglied (31) und das manuelle Steuerteil (28) umfasst, und andererseits ein Verschlussteil (41), das translatorisch in der axialen Richtung zwischen einer Betätigungsposition und wenigstens zwei stabilen Positionen zur Regulierung des Dampfauslasses beweglich ist und derart gestaltet ist, dass das Verschlussteil (41) aus einer Regulierposition in eine andere Regulierposition gelangt, während das Verstellglied (31) in eine Hin- und Herbewegung aus einer Ruheposition in seine Aktivierungsposition und wieder in eine Ruheposition gelangt.

2. Knopf (1) nach Anspruch 1, **dadurch gekennzeichnet, dass** die Reguliereinrichtung (3) ein Positionierglied (18) umfasst, das Positionierelemente (20a, 20b) unterschiedlicher Arten umfasst, wobei zu jeder Art von Positionierelement (20a, 20b) eine einzige Regulierposition des Verschlussteils (41) gehört, das translatorisch in der axialen Richtung in Bezug zu dem Positionierglied (18) beweglich ist, wobei die Positionierelemente (20a, 20b) eine Art axial in Bezug zu den Positionierelementen (20b, 20a) einer anderen Art verschoben sind und das Verschlussteil (41) in Anschlag aufnehmen, so dass die entsprechende Regulierposition gebildet wird, wobei das Stellglied (31) translatorisch in der axialen Richtung (7) in Bezug zu dem Positionierglied (18) beweglich ist und Stellelemente (32a, 32b) unterschiedlicher Arten umfasst, wobei zu jeder Art von Positionierelementen (32a, 32b) eine einzige Art von Stellelementen (20a, 20b) korrespondiert, wobei die Stellelemente (32a, 32b) einer Art so ausgebildet sind, dass sie, wenn das Stellglied (31) in seine Aktivierungsposition gebracht wird, das Verschlussteil (41) anfänglich in eine seiner Regulierpositionen gebracht wird, mit Ausnahme der Positionierelemente (20a, 20b) der Art, die mit dieser Anfangsposition korrespondiert, und diese derart verschiebt, dass, wenn das Stellglied (31) in seine Ruheposition gebracht wird, dieses an den Positionierelementen (20b, 20a) einer anderen Art so in Anschlag kommt, dass es in seiner korrespondierenden Regulierposition immobilisiert ist.

3. Knopf (1) nach Anspruch 2, **dadurch gekennzeichnet, dass** das Verschlussteil (41) ein Element (46) umfasst, das um die Translationsachse (7) drehbar ist und das so ausgebildet ist, dass dieses zyklisch an den Positionierelementen (20a, 20b) und den Stellelementen (32a, 32b) in Anschlag kommt, wobei jedes Positionierelement (20a, 20b) eine Immobilisierungsfläche (21 a, 21 b) umfasst, welche die mit dem Verschlussteil (41) korrespondierende Regulierposition bildet, und in welcher sich das Drehelement (46) in einer Winkel-Halteposition befindet, und eine Empfangsfläche (22a, 22b) entlang welcher das Drehelement (46) in der Weise gleiten kann, dass sich dieses aus einer Winkel-Anschlagposition bis in die durch das Positionierelement (20a, 20b) gebildete Winkel-Halteposition dreht, wenn das Verschlussteil (41) in die korrespondierende Regulierposition gebracht wird, wobei jedes Stellelement (32a, 32b) eine Stellfläche (37a, 37b) umfasst, entlang welcher das Drehelement (46) in der Weise gleiten kann, dass sich dieses aus der durch das Positionierelement (20a, 20b) gebildeten Winkel-Halteposition, aus welcher das Drehelement (46) durch diese Verschiebung herausgebracht worden ist, bis in die Winkel-Anschlagposition geschwenkt wird, die mit dem Positionierelement (20b, 20a) korrespondiert, gegen welches das Verschlussteil (41) in Anschlag kommt, wenn dieses aus seiner Betätigungsposition in Richtung seiner Regulierpositionen zurückkehrt.

4. Knopf (1) nach Anspruch 3, **dadurch gekennzeichnet, dass** das Drehelement (46) die allgemeine Form eines Sterns hat, bei dem jede Spitze durch einen Finger (47) gebildet wird, der nacheinander die Positionierelemente (20a, 20b) und die Stellelemente (32a, 32b) abstützen kann, wobei die Stellelemente (32a, 32b) und die Positionierelemente (20a, 20b) ringförmig um die Drehachse (7) des Drehelements (46) herum angeordnet sind.

5. Knopf (1) nach einem der Ansprüche 2 bis 4, **dadurch gekennzeichnet, dass** das Positionierglied (18) durch eine Basis (12) abgestützt wird, die Öffnungen (34) umfasst, welche den Durchgang und die Verschiebung der Stellelemente (32a, 32b) ermöglicht.

6. Knopf (1) nach einem der Ansprüche 1 bis 5, **dadurch gekennzeichnet, dass** eine Feder (42) einerseits das Verschlussteil (41) in seine Regulierpositionen und andererseits das Stellglied (31) in seine Ruheposition vorspannt.

7. Knopf (1) nach Anspruch 6, **dadurch gekennzeichnet, dass** das manuelle Steuerelement (28), das mit dem Stellglied (31) fest verbunden ist, eine Mitnahme des letzteren in seine Aktivierungsposition gegen die Feder (42) ermöglicht.

8. Knopf (1) nach einem der Ansprüche 1 bis 7, **dadurch gekennzeichnet, dass** das

9. Knopf (1) nach einem der Ansprüche 1 bis 8, **dadurch gekennzeichnet, dass** mit jeder Regulierposition des Verschlussteils (41) eine spezifische Ruheposition des Stellglieds (31) korrespondiert.

10. Knopf (1) nach einem der Ansprüche 2 bis 8, **dadurch gekennzeichnet, dass** eine Feder, die an dem Positionierglied (18) abgestützt ist, das Stellglied (31) in seine einzige Ruheposition vorspannt.
